# EUROPÄISCHE PATENTSCHRIFT

(11) **EP 1 586 260 B1**
(45) Veröffentlichungstag und Bekanntmachung des Hinweises auf die Patenterteilung: **09.09.2009**
(21) Anmeldenummer: 05008103.3
(22) Anmeldetag: 13.04.2005
(51) Int. Cl.: A47J 45/02, A47G 29/087

(54) **System zum Besfestigen von Gegenständen**
Mounting system for objects
Dispositif de fixation d'articles

(30) Priorität: 15.04.2004 DE 102004018274
(43) Veröffentlichungstag der Anmeldung: 19.10.2005
(73) Patentinhaber: bulthaup GmbH & Co KG, 84155 Bodenkirchen (DE)
(72) Erfinder: Koch, Manfred, 84140 Gangkofen (DE); Stigler, Martin, 84137 Vilsbiburg (DE); Delbeck, Klaus, 80339 München (DE)
(74) Vertreter: Klunker . Schmitt-Nilson . Hirsch

(56) Entgegenhaltungen:
- FR-A- 2 627 817
- US-A- 5 429 252
- US-A- 5 582 376
- US-B1- 6 220 461

## Beschreibung

Die vorliegende Erfindung betrifft ein System zum Befestigen von Gegenständen, insbesondere von Küchenzubehör.

Küchenzubehör, wie beispielsweise Küchenrollenhalter oder Messerhalter werden häufig an der Wand festgeschraubt oder auf die Arbeitsplatte einer Küche gestellt, wobei sich im ersten Fall der Nachteil ergibt, dass die Positionierung dieses Küchenzubehörs vorgegeben und daher unflexibel ist. Im zweiten Fall ergibt sich der Nachteil, dass die genannten Gegenstände häufig im Weg herumstehen und damit stören.

Es ist die Aufgabe der Erfindung ein System zum Befestigen von Gegenständen, insbesondere von Küchenzubehör bereitzustellen, das flexible Anordnungen der Gegenstände ermöglicht wobei die Tragelementen für den Nutzer nicht sichtbar sind.

Diese Aufgabe wird durch ein System zum Befestigen von Gegenständen mit den Merkmalen des Patentanspruchs 1. Ein ähnliches System ist aus der Druckschrift US-B-622 0 461 bekannt. Diese Ausführungsform der Erfindung hat den Vorteil, dass die Tragleiste oder die Tragelemente nicht sichtbar sind. Sie sind vorzugsweise an der Rückseite der Wand bzw. Paneelwand angebracht und befinden sich in einem Bereich, der durch die Befestigungseinheit zugänglich ist, so dass die Befestigungseinheit mit der Tragleiste oder den Tragelementen in Verbindung gebracht werden kann.

Besonders vorteilhaft ist es, wenn die ersten und/oder die zweiten Mittel derart ausgeführt sind, dass die Befestigung der Befestigungseinheit an der Tragleiste oder an den Tragelementen bzw. die Befestigung der Gegenstände an der Befestigungseinheit lösbar ist.

Die vorliegende Erfindung ermöglicht in bevorzugter Ausgestaltung die flexible Anordnung der Befestigungseinheit, vorzugsweise der Befestigungsleiste an einer Tragleiste und die flexible Anordnung der an der Befestigungseinheit angeordneten Gegenstände.

Die Tragleiste sowie die Befestigungsleiste können durchgehend oder auch in Abschnitte unterteilt ausgeführt sein. Sind die Verbindungen zwischen Tragleiste und Befestigungseinheit sowie zwischen Befestigungseinheit und den Gegenständen lösbar ausgeführt, lassen sich flexibel und an der gewünschten Stelle die Befestigungsleiste und daran ebenfalls flexibel die gewünschten Gegenstände befestigen. Vorzugsweise ist vorgesehen, dass die Befestigungseinheit bzw. -leiste in die Tragleiste eingehängt wird und dass die Gegenstände an der Befestigungseinheit bzw. -leiste eingehängt werden.

In weiterer Ausgestaltung der Erfindung ist vorgesehen, dass die Befestigungseinheit einen im Wesentlichen ebenen Bereich aufweist, der in seinem einen Endbereich abgewinkelt ist, und dass die Tragleiste eine Nut zur Aufnahme des abgewinkelten Bereiches der Befestigungseinheit aufweist. Dabei ist vorzugsweise vorgesehen, dass der im wesentlichen ebene Bereich horizontal angeordnet ist und dass sich der abgewinkelte Bereich demgegenüber nach unten erstreckt. Dabei kann vorgesehen sein, dass sich der abgewinkelte Bereich in einem Winkel von 0 - 45 °, vorzugsweise in einem Winkel von 30 - 45 ° gegenüber der Horizontalen nach unten erstreckt.

Ein besonders guter Halt ergibt sich, wenn der abgewinkelte Bereich der Befestigungseinheit auf seiner Oberseite profiliert, vorzugsweise geriffelt ausgeführt ist. Entsprechendes kann für die Oberseite der Nut der Tragleiste gelten, die den abgewinkelten Bereich der Befestigungseinheit aufnimmt.

Besonders vorteilhaft ist es, wenn die Tragleiste oder die Tragelemente eine oder mehrere zu dem abgewinkelten Bereich der Befestigungseinheit gemäß einem der Ansprüche 5 bis 8 komplementäre Nuten aufweist. Dabei kann vorgesehen sein, dass die Nut oder die Nuten der Tragleiste oder der Tragelemente relativ zur Horizontalen in einem Winkel verlaufen. Vorzugsweise entspricht dieser Winkel dem Winkel, in dem der abgewinkelte Bereich der Befestigungseinheit gegenüber der Horizontalen verläuft.

Ein besonders guter Halt ergibt sich, wenn die Nut oder die Nuten der Tragleiste oder der Tragelemente auf wenigstens einer Seite, vorzugsweise auf der Oberseite profiliert, vorzugsweise geriffelt ausgeführt ist. Dabei kann vorgesehen sein, dass die profilierte Fläche des abgewinkelten Bereiches der Befestigungseinheit in die profilierte Fläche der Tragleiste oder des Tragelementes eingreift. Erstreckt sich die Befestigungseinheit im Winkel, vorzugsweise im rechten Winkel von der Tragleiste oder von den Tragelementen, wird die Oberseite des abgewinkelten Bereiches der Befestigungseinheit aufgrund des auftretenden Momentes an die obere Wandung der Nut der Tragleiste oder der Tragelemente gepresst, wodurch sich eine besonders gute Arretierung ergibt.

Weiterhin kann vorgesehen sein, dass die ersten Mittel derart ausgeführt sind, dass sich der ebene Bereich der Befestigungseinheit im Wesentlichen im rechten Winkel von der Tragleiste erstreckt.

Die zweiten Mittel, mittels derer die Gegenstände an der Befestigungseinheit angeordnet werden können, können eine in dieser vorgesehene Nut umfassen. Dabei kann sich die Nut auf der Oberseite eines sich von der Befestigungseinheit erstrekkenden Vorsprungs befinden. Weiterhin kann vorgesehen sein, dass sich auf der Unterseite des Vorsprungs eine weitere Nut erstreckt.

Die Befestigungseinheit kann zwei im Winkel, vorzugsweise im rechten Winkel zueinander angeordnete Schenkel umfassen, wobei sich die ersten Mittel an dem einen der Schenkel und die zweiten Mittel an dem anderen der Schenkel befinden.

Weiterhin kann vorgesehen sein, dass die Befestigungseinheit einen ersten Abschnitt aufweist, in dem sich die ersten Mittel befinden und einen davon durch Stege beabstandeten zweiten Abschnitt, an dem sich die zweiten Mittel befinden.

Das System kann ferner die an der Befestigungseinheit zu montierenden Gegenstände umfassen, wobei diese Mittel aufweisen, mittels derer die Gegenstände an der Befestigungseinheit befestigt werden können. Die Gegenstände können einen Vorsprung aufweisen, mittels dessen diese in die Nut gemäß Anspruch 12 oder 13 einhängbar sind.

Bei dem oder den Gegenständen kann es sich beispielsweise um einen Buchhalter, einen Rollenhalter, ein Utensilienbord, einen Glashalter, einen Bücherhalter, eine Hakenleiste sowie einen Messerblock handeln. Selbstverständlich sind auch beliebige andere Funktionalitäten einsetzbar bzw. einhängbar.

Weitere Einzelheiten und Vorteile der Erfindung werden anhand eines in der Zeichnung dargestellten Ausführungsbeispiels näher erläutert.

Es zeigen:
- Fig. 1:: das erfindungsgemäße System zum Befestigen von Küchenzubehör in einer perspektivischen Ansicht von vome und von hinten,
- Fig. 2:: ein Utensilienbord mit Befestigungsleiste in unterschiedlichen Ansichten,
- Fig. 3:: einen Küchenrollenhalter mit Befestigungsleiste in unterschiedlichen Ansichten,
- Fig. 4:: einen Messerblock mit Befestigungsleiste in unterschiedlichen Ansichten,
- Fig. 5:: ein Utensilienbord mit Befestigungseinheit mit Stegen in unterschiedlichen Ansichten,
- Fig. 6:: einen Küchenrollenhalter mit Befestigungseinheit mit Stegen in unterschiedlichen Ansichten,
- Fig. 7:: einen Messerblock mit Befestigungseinheit mit Stege in unterschiedlichen Ansichten,
- Fig. 8:: eine Stange mit Befestigungseinheit mit Stegen in unterschiedlichen Ansichten,
- Fig. 9:: den unteren Abschnitt einer Befestigungseinheit mit Stegen in unterschiedlichen Ansichten und
- Fig. 10:: eine Schnittansicht der Tragleiste des erfindungsgemäßen Systems.

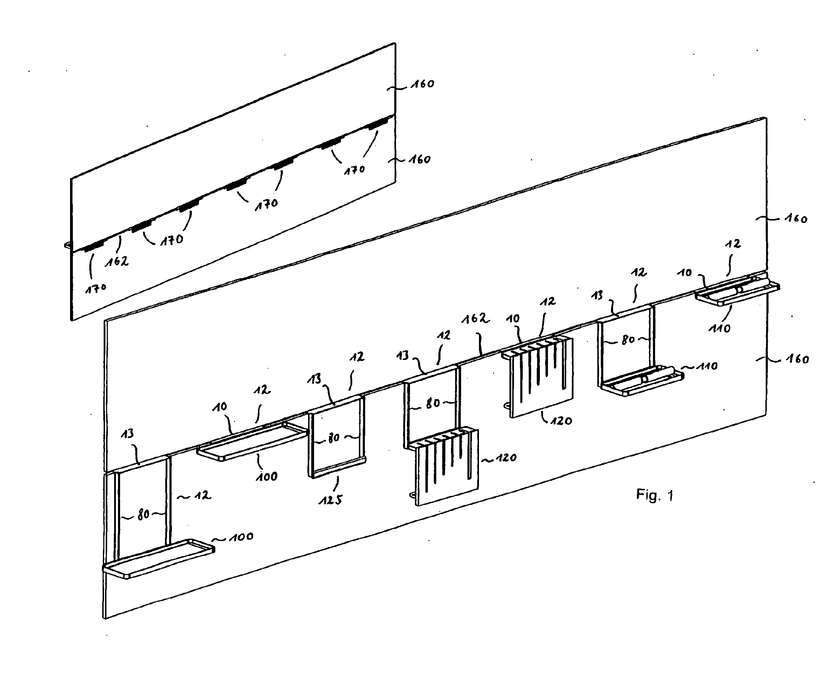

Figur 1 zeigt die Paneelwand 160, die eine Nut 162 aufweist, durch die Befestigungsleisten 10 sowie die Leisten 13 der Befestigungseinheiten 12 ragen, die zur Befestigung verschiedener Küchenutensilien bzw. zur Befestigung von Küchenzubehör dienen. Wie aus Fig. 1, oben ersichtlich, sind auf der Rückseite der Paneelwand 160 Tragleisten 170 angeordnet, in die die Befestigungseinheiten 12 bzw. die Leisten 10, 13 eingehängt sind. Die Befestigungseinheiten 12 können als Leisten 10 ausgeführt sein oder Stege 80 aufweisen, die sich von einem oberen leistenförmigen Abschnitt 13, der in die Tragleiste 170 eingehängt ist bis zu einer unteren Leiste erstrecken, die die zweiten Mittel aufweist, mittels derer das Küchenzubehör befestigt werden kann. Wie aus Figur 1 ersichtlich, kann es sich bei dem Küchenzubehör beispielsweise um ein Utensilienbord 100, einen Rollenhalter 110, einen Messerblock 120 oder eine Hakenleiste 125 handeln. Auch beliebige andere Funktions-Elemente sind denkbar.

Wie aus Figur 1 weiter hervorgeht, ist für jedes Küchenzubehör eine Befestigungseinheit 12 vorgesehen. Alternativ dazu ist denkbar, dass eine Befestigungseinheit bzw. Befestigungsleiste für mehrere Küchenutensilien vorgesehen ist. Die Befestigungseinheiten bzw. die Befestigungsleisten können eine Länge aufweisen, die in etwa der Breite der entsprechenden Küchenutensilien entspricht. Auch längere oder kürzere Ausführungen sind möglich. Femer ist denkbar, dass für jedes der Küchenzubehörteile mehrere Befestigungseinheiten bzw. -leisten vorgesehen sind.

Figur 1, oben zeigt die einzelnen, auf der Rückseite der Paneelwand 160 angeschraubten Tragleisten 170. Diese können auch als durchgehende Tragleiste ausgeführt sein. Die Paneelwand 160 ist vorzugsweise an einem an der Wand montierten Traggerüst befestigt.

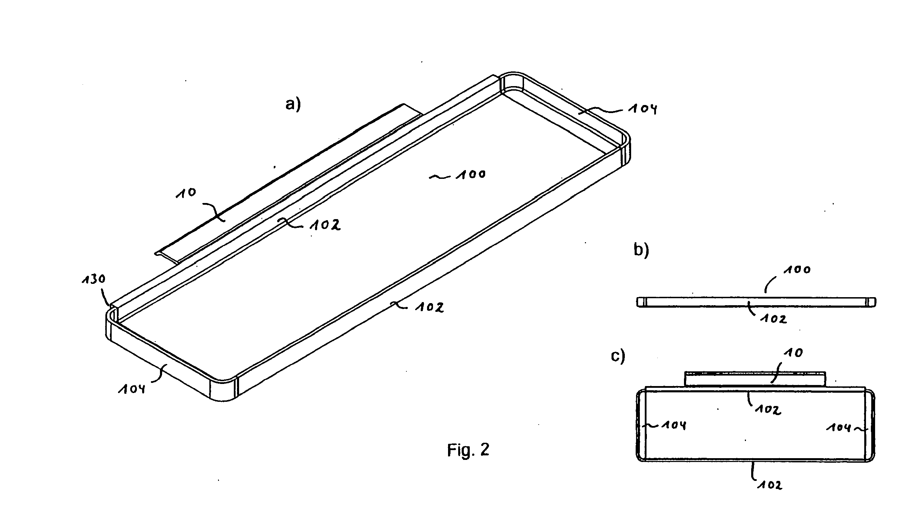

Aus Figur 2a ist eine perspektivische Ansicht des in die Leiste 10 eingehängten Utensilienbordes 100 ersichtlich. Das Bord 100 weist auf seiner Rückseite den Vorsprung 130 auf, der von oben in eine Nut der Befestigungsleiste 10 eingeführt wird. Wie aus Figur 2 ersichtlich, kann die Befestigungsleiste 10 grundsätzlich eine Länge aufweisen, die unter der Länge des Vorsprunges 130 liegt.

Grundsätzlich kann ebenso vorgesehen sein, dass die Länge von Vorsprung 130 und Nut sich entsprechen oder dass die Nut eine größere Länge als der Vorsprung 130 aufweist.

Wie sich aus Figur 2a weiter ergibt, weist das Bord 100 Längsseiten 102 und Schmalseiten 104 auf, wobei sich der Vorsprung 130 parallel zu der hinteren Längsseite 102 erstreckt.

Figur 2b zeigt das Bord 100 mit Einhängeleiste 10 in einer Ansicht von vorne und Figur 2c in einer Draufsicht.

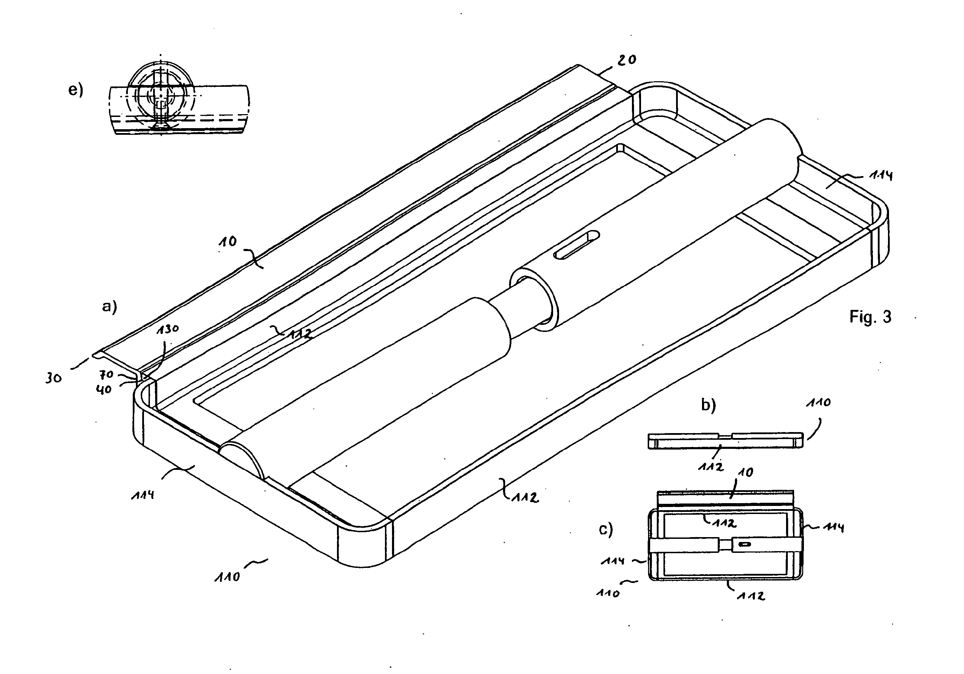

Aus Figur 3a ist eine perspektivische Ansicht des in der Leiste 10 eingehängten Küchenrollenhalters 110 ersichtlich. Auch dieser weist Längsseiten 112 und Schmalseiten 114 auf, wobei sich der Vorsprung 130 parallel zu der hinteren Längsseite 112 erstreckt. Dieser greift in die Nut 40 der Leiste 10 ein.

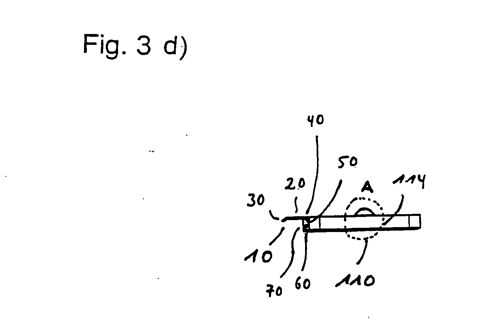

Der Küchenrollenhalter weist ferner eine rotierbare Walze zur Aufnahme der Küchenrolle auf, die im Detail in Figur 3e dargestellt ist, die das Detail A gemäß Figur 3d zeigt.

Figur 3b zeigt eine Vorderansicht und Figur 3c eine Draufsicht auf die Anordnung gemäß Figur 3a.

Figur 3d zeigt die Anordnung gemäß Figur 3a in einer Seitenansicht. Hieraus wird ersichtlich, dass die Befestigungsleiste 10 einen horizontalen Schenkel 20 mit einem abgewinkelten Endbereich 30 aufweist. Des weiteren ist ein vertikal verlaufender Schenkel 70 vorgesehen, von dem sich ein Vorsprung 50 erstreckt, der auf seiner Oberseite die Nut 40 und auf seiner Unterseite die Nut 60 aufweist. Der abgewinkelte Endbereich 30 dient zum Einhängen der Befestigungsleiste 10 bzw. der Befestigungseinheit 12 in die Tragleiste 170. Die obere Nut 40 dient zur Aufnahme des Vorsprungs 130 des Halters 110.

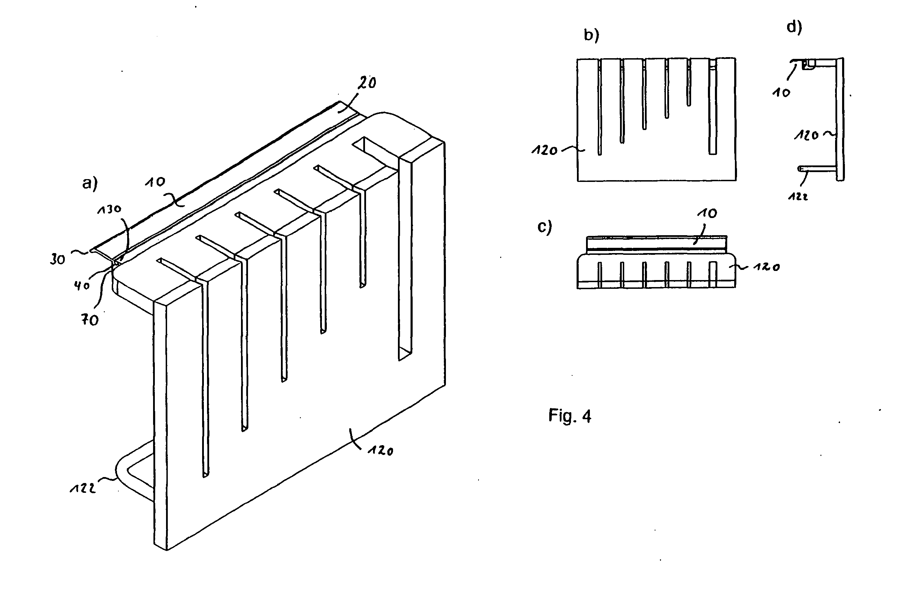

Figur 4a zeigt den in die Befestigungsleiste 10 eingehängten Messerblock 120. Auf dessen Rückseite Seite erstreckt sich der Vorsprung 130, der in die Nut 40 auf der Oberseite des Vorsprungs des vertikalen Schenkels 70 der Befestigungsleiste 10 eingreift. Auch aus dieser Ansicht ist der abgewinkelte Endbereich 30 der Befestigungsleiste 10 ersichtlich, der in die hier nicht dargestellte Tragleiste eingreift.

Auf der Rückseite des Messerblockes befindet sich ferner die bügelartig ausgeführte Abstützung 122.

Figur 4b zeigt eine Vorderansicht auf den Messerblock 120, Figur 4c eine Draufsicht auf den Messerblock mit Befestigungsleiste 10 und Fig. 4d eine Seitenansicht der Anordnung.

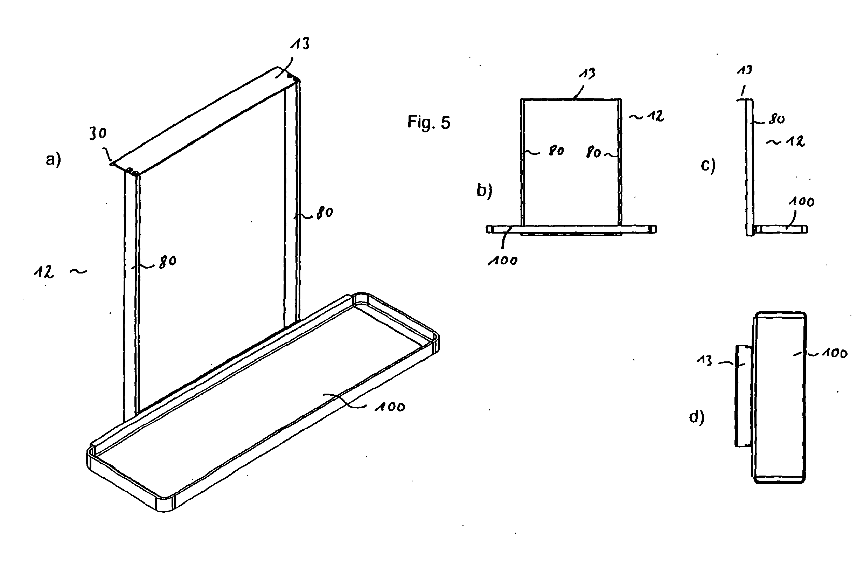

Aus Figur 5 ist das an einer Befestigungseinheit 12 angeordnete Utensilienbord 100 ersichtlich. Die Befestigungseinheit 12 besteht aus einer Leiste 13, die in ihrem hinteren Bereich den abgewinkelten Abschnitt 30 aufweist, mittels dessen die Befestigungseinheit 12 bzw. die Leiste 13 in die Tragleiste 170 eingehängt wird. Insoweit entspricht die Leiste 13 der oben dargestellten Leiste 10 Die Leiste 13 ist im wesentlichen horizontal ausgeführt. Von dieser erstrecken sich die zwei Stege 80, in deren unterem Endbereich sich eine Leiste erstreckt, die die Mittel aufweist, mittels der das Küchenzubehör an der Befestigungseinheit 12 befestigt wird. Die Ausführung dieser zweiten Mittel entspricht den genannten Befestigungsmitteln 40, 50, 60, so dass entsprechend Bezug genommen wird.

Figur 5a zeigt die Anordnung in einer perspektivischen Ansicht, Figur 5b in einer Ansicht von vorne, Figur 5c in einer Seitenansicht und Figur 5d in einer Draufsicht. Die im unteren Endbereich der Stege angeordnete Leiste weist die Nut 40 auf, in die der Vorsprung 130 des Bordes 110 eingehängt wird. Somit ergibt sich eine entsprechende Befestigungsmöglichkeit wie in dem Ausführungsbeispiel der Befestigungseinheit 12 als Befestigungsleiste 10 gemäß der Figuren 2 bis 4. Das Bord 100 entspricht dem in Fig. 2 dargestellten. Die Stege 80 sind mittels je zweier Schrauben an der Leiste 13 sowie an der unteren Leiste fixiert.

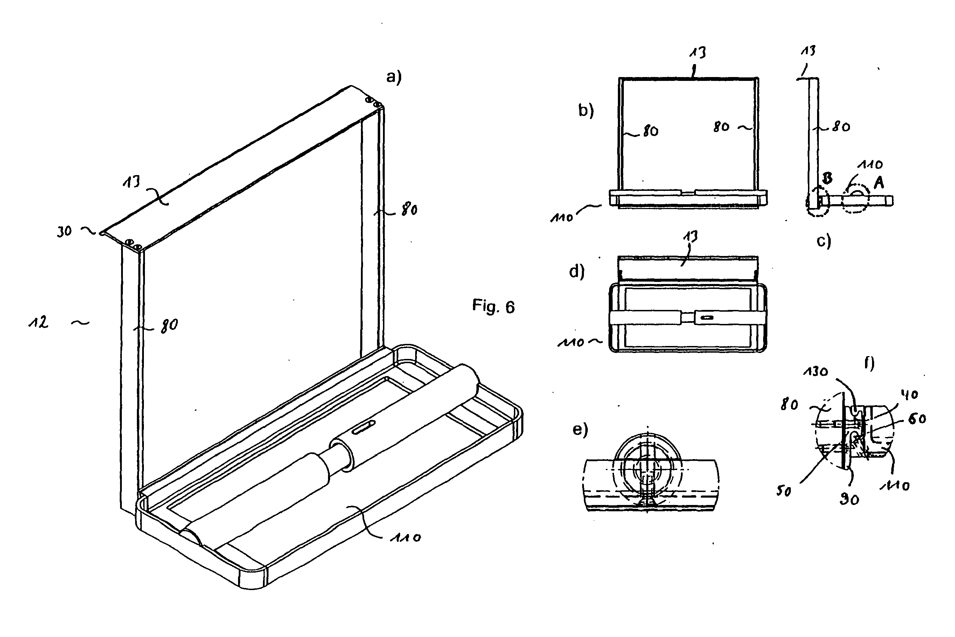

Figur 6 zeigt die Befestigungseinheit gemäß Figur 5 mit einem darin eingehängten Küchenrollenhalter 110. Die Befestigungseinheit 12 entspricht der bereits zu Figur 5 erläuterten. Der Küchenrollenhalter 110 entspricht dem zu Figur 3 erläuterten, so dass entsprechend Bezug genommen wird. Figur 6a zeigt eine perspektivische Darstellung der Anordnung, Figur 6b die Anordnung von vome, Figur 6c eine Seitenansicht, Figur 6d eine Draufsicht, Figur 6e eine Detailansicht gemäß Detail A in Figur 6c und Figur 6f eine Detailansicht gemäß Detail B in Figur 6c. Aus Figur 6f ergibt sich die Anordnung der Leiste 90, die im unteren Endbereich der Stege 80 angeordnet ist. Diese weist einen Vorsprung 50 auf, auf dessen Oberseite sich die Nut 40 und auf dessen Unterseite sich die Nut 60 erstreckt. In die Nut 40 wird der Vorsprung 130 des Küchenrollenhalters 110 oder eines sonstigen beliebigen Küchenzubehörs eingehängt. Die untere Nut 60 bleibt im wesentlichen frei. Der diese begrenzende zu dem Küchenzubehör gerichtete Vorsprung dient dazu, beim Einsetzen des Küchenzubehörs eine federbeaufschlagte Kugel oder ein sonstiges Druckelement zurückzudrücken bis sich die Kugel an dem Vorsprung vorbeibewegt hat. Das Zurückspringen der Kugel erzeugt ein akustisches Signal, das anzeigt, dass das Küchenzubehör korrekt eingesetzt ist. Wie aus Figur 6f weiter ersichtlich, wird die Leiste 90 im Endbereich der Stege 80 verschraubt.

Grundsätzlich kann zusätzlich vorgesehen sein, dass die eingehängten Gegenstände durch Feststellschrauben gesichert werden.

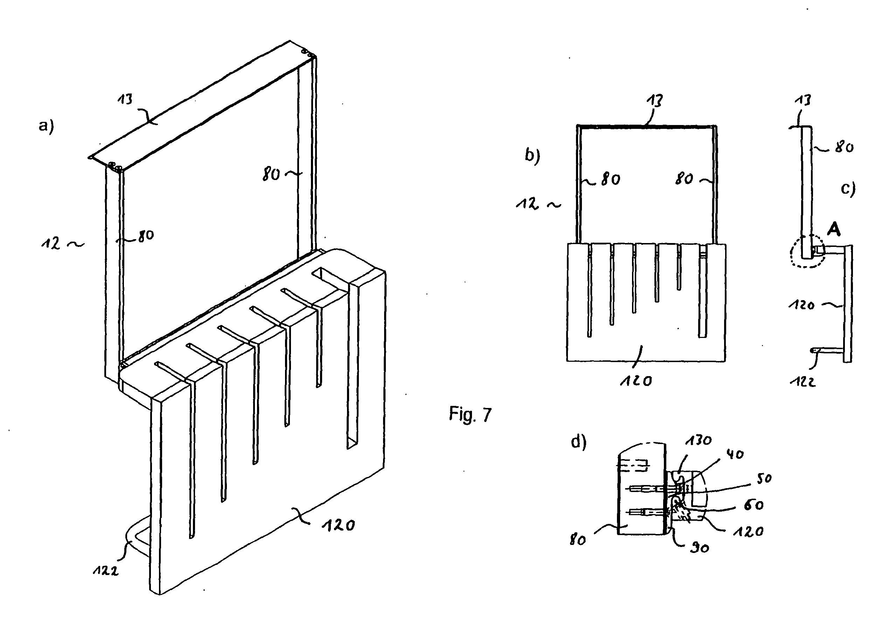

Figur 7 zeigt eine Figur 6 entsprechende Anordnung, wobei der Küchenrollenhalter 110 durch den Messerblock 120 ersetzt ist. Der Messerblock entspricht dem zu Figur 4 beschriebenen.

Figur 7a zeigt eine perspektivische Darstellung der Anordnung, Figur 7b eine Vorderansicht, Figur 7c eine Seitenansicht und Figur 7d eine Detailansicht gemäß Detail A in Figur 7c.

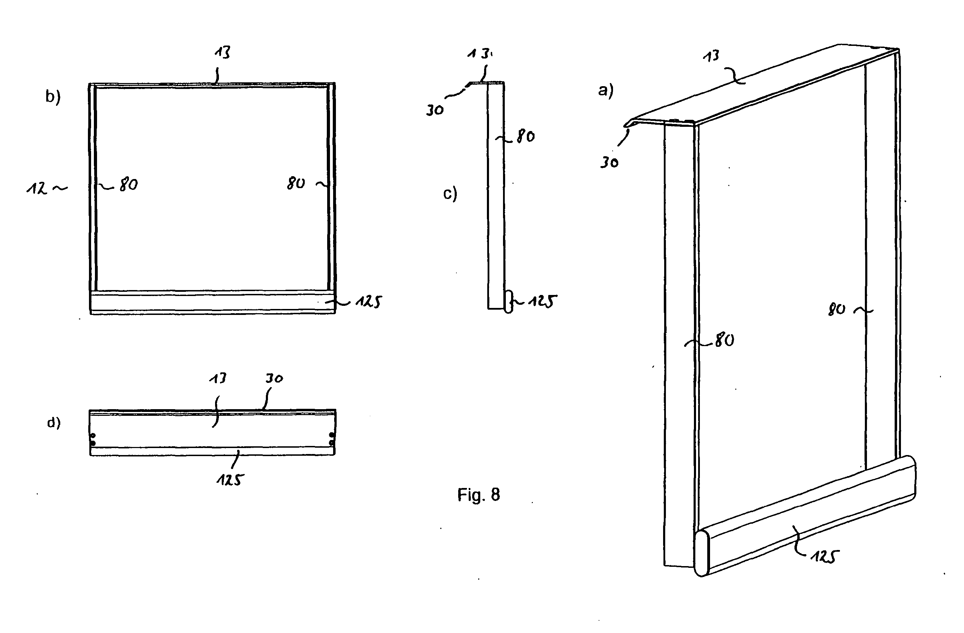

Figur 8 zeigt eine Befestigungseinheit 12, in deren unteren Abschnitt die Hakenleiste 125 fest, d. h. nicht lösbar angeordnet ist. Diese dient zum Einhängen von Haken, die darauf vorzugsweise verschieblich angeordnet sind. Figur 8a zeigt eine perspektivische Anordnung, Figur 8b eine Ansicht von vome, Figur 8c eine Seitenansicht und Figur 8d eine Draufsicht der Anordnung.

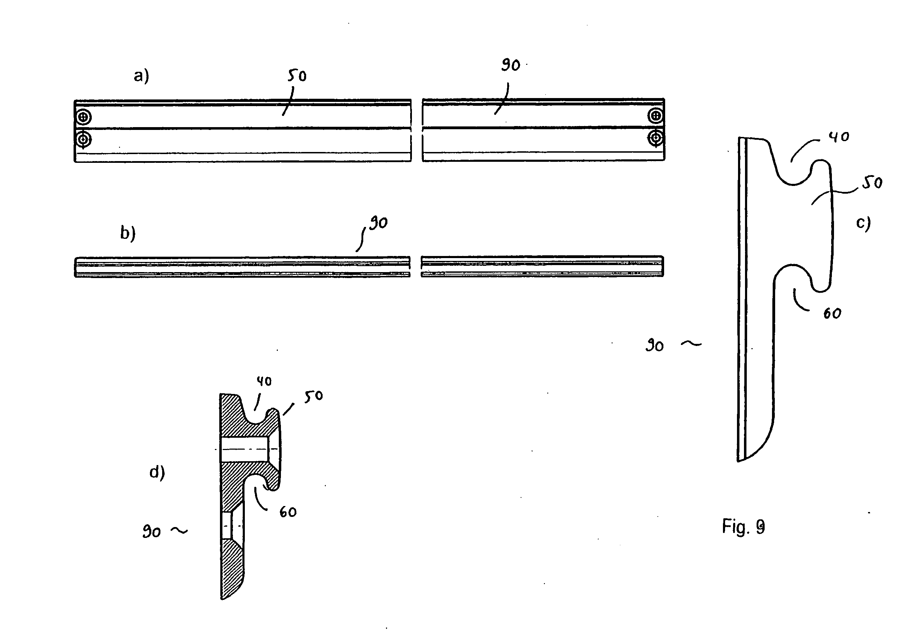

Figur 9 zeigt unterschiedliche Ansichten der im unteren Endbereich der Stege 80 angeordneten Leiste 90. Diese weist in ihren Endbereichen jeweils zwei Bohrungen auf, die zur Aufnahme von Schrauben dienen, mittels derer die Leiste 90 an den Stegen 80 montierbar ist. Figur 9a zeigt eine Vorderansicht, Figur 9b eine Draufsicht, Figur 9c eine Seitenansicht und Figur 9d eine Schnittdarstellung.

Aus Figur 9c ergibt sich, das sich von der Leiste 90 ein Vorsprung 50 erstreckt, der auf seiner Oberseite mit der Nut 40 und auf seiner Unterseite mit der Nut 60 versehen ist. Die Nut 40 dient zur Aufnahme des vorgenannten Vorsprunges 130 des Küchenzubehörs. Der die rechte Wandlung der unteren Nut 60 bildende Vorsprung dient vorzugsweise zum Eindrücken einer an dem Küchenzubehör angeordneten und federbelasteten Kugel oder einem sonstigen Druckelement, das aufgrund der Federkraft wieder in die ursprüngliche Lage zurückspringt, sobald diese den genannten Vorsprung passiert hat.

Die in Figur 9 dargestellte Leiste 90 entspricht im wesentlichen dem vertikalen Schenkel 70, der in den Figuren 1 bis 4 dargestellten Leiste 10. Die Leiste gemäß Figur 9 kann nicht nur im unteren Endbereich der Stege 80 der Befestigungseinheit 12 montiert werden, sondem kann auch als Mauerleiste dienen, die unmittelbar auf der Mauer angeschraubt wird. In dieser Ausführungsform der Erfindung kann die Tragleiste dementsprechend entfallen.

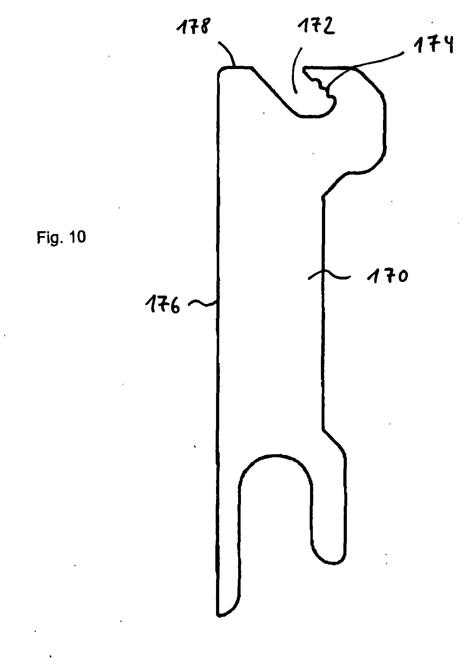

Fig. 10 zeigt in einer Querschnittansicht die Tragleiste 170 des erfindungsgemäßen Befestigungssystems. Auf ihrer links dargestellten geraden Seite 176 wird die Tragleiste 170 beispielsweise an einer Wand oder an einer Paneelwand montiert, vorzugsweise verschraubt. Findet die Montage an einer Paneelwand statt, wird die Tragleiste 170 mit ihrer Seite 176 vorzugsweise an der Rückwand der Paneelwand montiert, so dass diese im montierten Zustand der Paneelwand nicht sichtbar ist. Auf der Oberseite der Tragleiste 170 befindet sich die Nut 172, die eine untere Nutwandung und eine obere Nutwandung 174 aufweist. In die Nut 172 wird der abgewinkelte Endbereich 30 der Befestigungseinheit bzw. der Leiste 10 gemäß Fig. 10 von links eingesteckt. Dieser kann auf seiner Oberseite eine Profilierung aufweisen, die mit der Profilierung auf der Nutoberseite 174 kämmt. Der horizontale Abschnitt der Befestigungseinheit 12 bzw. deren Leiste 10 stützt sich auf dem Plateau 178 der Tragleiste 170 ab. Wird die Befestigungseinheit belastet, wird die Oberseite des abgewinkelten Bereichs 30. an die Oberseite 174 der Nut 172 gepresst, wodurch sich ein besonders sicherer Halt ergibt.

Die Materialwahl der Tragleiste, der Befestigungseinheit sowie der daran anzuordnenden Gegenstände ist beliebig. Ein bevorzugtes Material ist Aluminium. Jedoch können auch andere Werkstoffe oder Materialkombinationen eingesetzt werden.

## Patentansprüche

1. System zum Befestigen von Gegenständen, insbesondere von Küchenzubehör, mit einer Tragleiste (170) oder Tragelementen sowie mit einer Befestigungseinheit (12), wobei erste Mittel vorgesehen sind, mittels derer die Befestigungseinheit (12) an der Tragleiste (170) oder an den Tragelementen lösbar montierbar ist, wobei zweite Mittel vorgesehen sind, mittels derer die Gegenstände an der Befestigungseinheit (12) befestigt werden können,
**dadurch gekennzeichnet,**
**dass** eine Paneelwand (160) vorgesehen ist, auf deren Vorderseite sich die Gegenstände befinden und auf deren Rückseite die Tragleiste (170) oder die Tragelemente angeordnet sind, wobei in der Paneelwand (160) eine oder mehrere Öffnungen, vorzugweise eine schlitzförmige Öffnung angeordnet ist, durch die sich die Befestigungseinheit wenigstens teilweise erstreckt.

2. System nach Anspruch 1, **dadurch gekennzeichnet, dass** die Befestigungseinheit (12) als Leiste (10) ausgeführt ist.

3. System nach Anspruch 1 oder 2, **dadurch gekennzeichnet, dass** die zweiten Mittel derart ausgeführt sind, dass die Befestigung der Gegenstände an der Befestigungseinheit (12) lösbar ist.

4. System nach Anspruch 3, **dadurch gekennzeichnet, dass** die Befestigungseinheit (12) in die Tragleiste (170) oder die Tragelemente einhängbar ist und/oder dass die Gegenstände in die Befestigungseinheit (12) einhängbar sind.

5. System nach einem der vorhergehenden Ansprüche, **dadurch gekennzeichnet, dass** die Befestigungseinheit (12) einen im wesentlichen ebenen Bereich (20) aufweist, der in seinem einen Endbereich (30) abgewinkelt ist, und dass die Tragleiste (170) oder die Tragelemente eine Nut zur Aufnahme des abgewinkelten Bereiches (30) der Befestigungseinheit (12) aufweist.

6. System nach Anspruch 5, **dadurch gekennzeichnet, dass** der im wesentlichen ebene Bereich (20) horizontal angeordnet ist und dass sich der abgewinkelte Bereich (30) demgegenüber nach unten erstreckt.

7. System nach Anspruch 6, **dadurch gekennzeichnet, dass** sich der abgewinkelte Bereich (30) in einem Winkel von 0 bis 45° gegenüber der Horizontalen nach unten erstreckt.

8. System nach Anspruch 5 bis 7, **dadurch gekennzeichnet, dass** der abgewinkelte Bereich (30) auf seiner Oberseite profiliert, vorzugsweise geriffelt ausgeführt ist.

9. System nach einem der vorhergehenden Ansprüche, **dadurch gekennzeichnet, dass** die Tragleiste (170) oder die Trageelemente eine oder mehrere zu dem abgewinkelten Bereich (30) der Befestigungseinheit gemäß einem der Ansprüche 5 bis 8 komplementäre Nuten (172) aufweist.

10. System nach Anspruch 9, **dadurch gekennzeichnet, dass** die Nut (172) oder die Nuten der Tragleiste (170) oder der Tragelemente auf wenigstens einer Seite, vorzugweise auf der Oberseite (174) profiliert, vorzugsweise geriffelt ausgeführt ist.

11. System nach einem der Ansprüche 5 bis 10, **dadurch gekennzeichnet, dass** die ersten Mittel derart ausgeführt sind, dass sich der ebene Bereich (20) der Befestigungseinheit (12) im wesentlichen im rechten Winkel von der Tragleiste (170) oder von den Tragelementen erstreckt.

12. System nach einem der vorhergehenden Ansprüche, **dadurch gekennzeichnet, dass** die zweiten Mittel eine in der Befestigungseinheit (12) vorgesehene Nut (40) umfassen.

13. System nach Anspruch 12, **dadurch gekennzeichnet, dass** sich die Nut (40) auf der Oberseite eines sich von der Befestigungseinheit (12) erstreckenden Vorsprungs (50) befindet.

14. System nach Anspruch 13, **dadurch gekennzeichnet, dass** sich auf der Unterseite des Vorsprungs (50) eine weitere Nut (60) befindet.

15. System nach einem der vorhergehenden Ansprüchen, **dadurch gekennzeichnet, dass** die Befestigungseinheit (12) zwei im Winkel, vorzugsweise im rechten Winkel angeordnete Schenkel (20, 70) umfasst, wobei sich die ersten Mittel an dem einen der Schenkel (20) und die zweiten Mittel an dem anderen der Schenkel (70) befinden.

16. System nach einem der vorhergehenden Ansprüche, **dadurch gekennzeichnet, dass** die Befestigungseinheit (12) einen ersten Abschnitt (20) aufweist, an dem sich die ersten Mittel befinden und einen davon durch Stege (80) beabstandeten zweiten Abschnitt (90), an dem sich die zweiten Mittel befinden.

17. System nach einem der vorhergehenden Ansprüche, **dadurch gekennzeichnet, dass** das System ferner an der Befestigungseinheit (12) montierbare Gegenstände (100, 110, 120) umfasst und dass diese Mittel aufweisen, mittels derer die Gegenstände (100, 110, 120) an der Befestigungseinheit (12) befestigt werden können.

18. System nach Anspruch 17, **dadurch gekennzeichnet, dass** die Gegenstände (100, 110, 120) einen Vorsprung (130) aufweisen, mittels dessen diese in die Nut (40) gemäß Anspruch 10 oder 11 einhängbar sind.

19. System nach einem der vorhergehenden Ansprüche, **dadurch gekennzeichnet, dass** der oder die Gegenstände aus der Gruppe Bord (100), Rollenhalter (110), Messerblock (120), Glashalter, Bücherhalter und Hakenleiste (125) ausgewählt sind.

## Claims

1. A system for the fastening of objects, in particular of kitchen accessories, having a support rail (170) or support elements as well as having a fastening unit (12), wherein first means are provided by means of which the fastening unit (12) can be mounted to the support rail (170) or to the support elements, and wherein two means are provided by means of which the objects can be fastened to the fastening unit (12),
**characterised in that**
a panel wall (150) is provided on whose front side the objects are located and on whose rear side the support rail (170) or the support elements are arranged, with one or more openings, preferably a slit-shaped opening, being arranged in the panel wall (160) through which opening or openings the fastening unit extends at least partly.

2. A system in accordance with claim 1, **characterised in that** the fastening unit (12) is made as a rail (10).

3. A system in accordance with either of claims 1 or 2, **characterised in that** the second means are made such that the fastening of the objects to the fastening unit (12) is releasable.

4. A system in accordance with claim 3, **characterised in that** the fastening unit (12) can be hung into the support rail (170) or into the support elements; and/or **in that** the objects can be hung into the fastening unit (12).

5. A system in accordance with one of the preceding claims, **characterised in that** the fastening unit (12) has an essentially planar region (20) which is angled in its one end region (30); and **in that** the support rail (170) or the support elements has/have a groove for the reception of the angled region (30) of the fastening unit (12).

6. A system in accordance with claim 5, **characterised in that** the substantially planar region (20) is arranged horizontally; and **in that** the angled region (30) extends downwardly with respect thereto.

7. A system in accordance with claim 6, **characterised in that** the angled region (30) extends downwardly at an angle of 0 to 45° with respect to the horizontal.

8. A system in accordance with claims 5 to 7, **characterised in that** the angled region (30) is made with a profile, preferably with ribbing, on its upper side.

9. A system in accordance with one of the preceding claims, **characterised in that** the support rail (170) or the support elements have one or more grooves (172) complementary to the angled region (30) of the fastening unit in accordance with one of the claims 5 to 8.

10. A system in accordance with claim 9, **characterised in that** the groove (172) or the grooves of the support rail (170) or of the support elements are preferably made with a profile, preferably with ribbing, on at least one side, preferably the upper side (174).

11. A system in accordance with one of the claims 5 to 10, **characterised in that** the first means are made such that the planar region (20) of the fastening unit (12) extends substantially at a right angle from the support rail (170) or from the support elements.

12. A system in accordance with one of the preceding claims, **characterised in that** the second means include a groove (40) provided in the fastening unit (12).

13. A system in accordance with claim 12, **characterised in that** the groove (40) is located on the upper side of a projection (50) extending from the fastening unit (12).

14. A system in accordance with claim 13, **characterised in that** a further groove (60) is located on the lower side of the projection (50).

15. A system in accordance with one of the preceding claims, **characterised in that** the fastening unit (12) includes two limbs (20, 70) arranged at an angle, preferably at a right angle, with the first means being located at the one of the limbs (20) and the second means being located at the other of the limbs (70).

16. A system in accordance with one of the preceding claims, **characterised in that** the fastening unit (12) has a first section (20) at which the first means are located and a second section (90) which is spaced therefrom by webs (80) and at which the second means are located.

17. A system in accordance with one of the preceding claims, **characterised in that** the system furthermore includes objects (100, 110, 120) which can be mounted to the fastening unit (12); and **in that** said objects comprise means by means of which the objects (110, 110, 120) can be fastened to the fastening unit (12).

18. A system in accordance with claim 17, **characterised in that** the objects (100, 110, 120) comprise a projection (130) by means of which said objects can be hung into the groove (40) in accordance with claim 10 or claim 11.

19. A system in accordance with one of the preceding claims, **characterised in that** the object or objects is/are selected from the group board (100), roll holder (110), knife block (120), glass holder, book holder and hook rail (125).

## Revendications

1. Dispositif de fixation d'articles, notamment d'accessoires de cuisine, doté d'une barre de support (170) ou d'éléments de support ainsi que d'une unité de fixation (12), sachant que des premiers moyens sont prévus, à l'aide desquels l'unité de fixation (12) est montable de manière amovible sur la barre de support (170) ou sur les éléments de support, sachant que des seconds moyens sont prévus, à l'aide desquels les objets peuvent être fixés à l'unité de fixation (12),
**caractérisé en ce que**,
un panneau (160) est prévu, au recto duquel les objets se trouvent et au verso duquel la barre de support (170) ou les éléments de support sont disposés, sachant que dans le panneau (160) un ou plusieurs orifices sont disposés, de préférence un orifice en forme de fente, à travers lequel l'unité de fixation se projette au moins en partie.

2. Dispositif selon la revendication 1, **caractérisé en ce que** l'unité de fixation (12) est construite comme barre (10).

3. Dispositif selon les revendications 1 ou 2, **caractérisé en ce que** les seconds moyens sont construits de sorte que la fixation des objets est amovible sur l'unité de fixation (12).

4. Dispositif selon la revendication 3, **caractérisé en ce que** l'unité de fixation (12) est accrochable dans la barre de support (170) ou **en ce que** les éléments de support et/ou les objets sont accrochables dans l'unité de fixation (12).

5. Dispositif selon l'une des revendications précédentes, **caractérisé en ce que** l'unité de fixation (12) présente une zone principalement plane (20), qui est coudée dans sa zone d'extrémité (30) et **en ce que** la barre de support (170) ou les éléments de support présentent une rainure destinée à la réception de la zone coudée (30) de l'unité de fixation (12).

6. Dispositif selon la revendication 5, **caractérisé en ce que** la zone principalement plane (20) est disposée horizontalement et **en ce que** la zone coudée (30) se projette vers le bas face à celle-ci.

7. Dispositif selon la revendication 6, **caractérisé en ce que** la zone coudée (30) se projette vers le bas dans un angle de 0 à 45° par rapport à l'horizontale.

8. Dispositif selon les revendications 5 à 7, **caractérisé en ce que** la zone coudée (30) est construite de manière profilée, mais cannelée de préférence sur son flanc supérieur.

9. Dispositif selon l'une des revendications précédentes, **caractérisé en ce que** la barre de support (170) ou les éléments de support présentent une ou plusieurs rainures (172) complémentaire à la zone coudée (30) de l'unité de fixation selon l'une des revendications 5 à 8.

10. Dispositif selon la revendication 9, **caractérisé en ce que** la rainure (172) ou les rainures de la barre de support (170) ou des éléments de support sont construites de manière profilée, mais cannelée de préférence au moins sur un flanc, de préférence sur le flanc supérieur (174).

11. Dispositif selon l'une des revendications 5 à 10, **caractérisé en ce que** les premiers moyens sont construits de sorte que la zone plane (20) de l'unité de fixation (12) se projette principalement à angle droit à partir de la barre de support (170) ou des éléments de support.

12. Dispositif selon l'une des revendications précédentes, **caractérisé en ce que** les seconds moyens comprennent une rainure (40) prévue sur l'unité de fixation (12).

13. Dispositif selon la revendication 12, **caractérisé en ce que** la rainure (40) se trouve sur le flanc supérieur d'une partie en saillie (50) se projetant à partir de l'unité de fixation (12).

14. Dispositif selon la revendication 13, **caractérisé en ce qu'**une autre rainure (60) se trouve sur le flanc inférieur de la partie en saillie (50).

15. Dispositif selon l'une des revendications précédentes, **caractérisé en ce que** l'unité de fixation (12) comprend deux montants (20, 70) disposés de préférence à angle droit, sachant que les premiers moyens se trouvent sur l'un des montants (20) et les seconds moyens sur l'autre des montants (70).

16. Dispositif selon l'une des revendications précédentes, **caractérisé en ce que** l'unité de fixation (12) présente une première section (20), sur laquelle les premiers moyens se trouvent et une seconde section (90) sur laquelle les seconds moyens se trouvent, écartée de celle-ci par des entretoises (80).

17. Dispositif selon l'une des revendications précédentes, **caractérisé en ce que** le dispositif comprend par ailleurs des objets (100, 110, 120) montables sur l'unité de fixation (12) et **en ce que** ceux-ci présentent des moyens, à l'aide desquels les objets (100, 110, 120) peuvent être fixés sur l'unité de fixation (12).

18. Dispositif selon la revendication 17, **caractérisé en ce que** les objets (100, 110, 120) présentent une partie en saillie (130), à l'aide de laquelle ceux-ci sont accrochables à la rainure (40) selon les revendications 10 ou 11.

19. Dispositif selon l'une des revendications précédentes, **caractérisé en ce que** le ou les objets sont sélectionnés à partir du groupe bord (100), du support de rouleaux (110), du bloc à couteaux (120), du porte-verres, du serre-livres et de la barre à crochets (125).
